# EUROPEAN PATENT APPLICATION

(11) **EP 2 790 421 A1**
(43) Date of publication of application: **15.10.2014**
(21) Application number: 13191591.0
(22) Date of filing: 05.11.2013
(51) Int. Cl.: H04W 4/00, H04W 24/00, H04W 84/18

(54) **Network settings synchronization method**

(30) Priority: 12.04.2013 TW 102113136
(71) Applicant: Compal Broadband Networks Inc., 114 Taipei City (TW)
(72) Inventor: Huang, Yan-Wei, 970 Hualien County (TW)
(74) Representative: Becker Kurig Straus

(57) **Abstract**

A network settings synchronization method (30) is utilized for a wireless communication system (10), wherein the wireless communication system (10) includes a master wireless device (MD) and at least one slave wireless device (SD_1-SD_n). The network settings synchronization method (30) includes the at least one slave wireless device (SD_1-SD_n) building a connection with the master wireless device (MD) through a communication protocol (308); and the at least one slave wireless device (SD_1-SD_n) synchronizing a plurality of network settings with the master device (MD) through the connection (308).

## Description

### Field of the Invention

The invention relates to a network settings synchronization method, and especially to a network settings synchronization method capable of effectively synchronizing network settings of multiple wireless devices through a wireless network.

### Background of the Invention

To establish a wireless network, multiple wireless devices need to be configured. According to actual requirements, each wireless device of the multiple wireless devices may be configured by a same network setting. At present, setting the network settings of the multiple wireless devices is performed manually by a human, which is very time-consuming and labor-intensive. Additionally, by another existing method, the network settings of the multiple wireless devices may be synchronized through a wired local area network (LAN).

However, when the multiple wireless devices cannot communicate through the wired LAN, such as wireless bridges, wireless repeaters, or wireless devices supporting mesh network, the network settings of the multiple wireless devices may not be synchronized through the wired LAN. Therefore, how to efficiently synchronize the network settings of the multiple wireless devices has become one goal of the industry.

### Summary of the Invention

The present invention aims at providing a network settings synchronization method capable of effectively synchronizing network settings of multiple wireless devices through a wireless network.

This is achieved by a network settings synchronization method according to claims 1 and a wireless communication system according to claim 7. The dependent claims pertain to corresponding further developments and improvements.

As will be seen more clearly from the detailed description following below, the claimed network settings synchronization method is utilized for a wireless communication system, wherein the wireless communication system comprises a master wireless device and at least one slave wireless device. The network settings synchronization method comprises the at least one slave wireless device building a connection with the master wireless device through a communication protocol; and the at least one slave wireless device synchronizing a plurality of network settings with the master device through the connection.

In another aspect, as will be seen more clearly from the detailed description following here below, the claimed wireless communication system comprises a master wireless device comprising a plurality of network settings; and at least one slave wireless device configured to build a connection with the master wireless device through a communication protocol, and synchronize the plurality of network settings with the master device through the connection.

### Brief Description of the Drawings

The invention is further illustrated by way of example with reference to the accompanying drawings. Thereof,
FIG. 1 is a schematic diagram of a wireless communication system according to an embodiment of the present invention,
FIG. 2 is an operation timing diagram of the wireless communication system in FIG. 1,
FIG. 3 and FIG. 4 are schematic diagrams of a wireless network settings synchronizing process,
FIG. 5 is a schematic diagram of a wireless communication system according to an embodiment of the present invention, and
FIG. 6 is a schematic diagram of configuring a wireless device in FIG. 5 to a master wireless device.

### Detailed Description

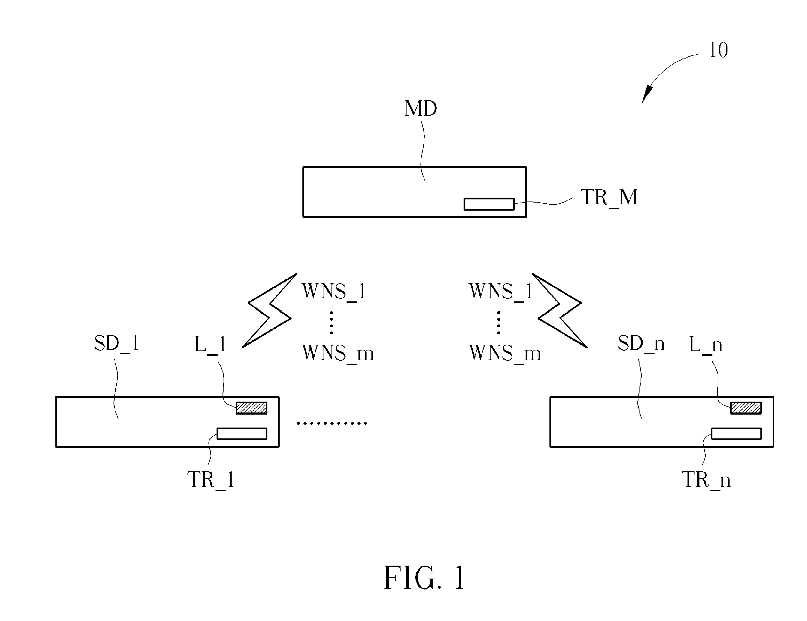

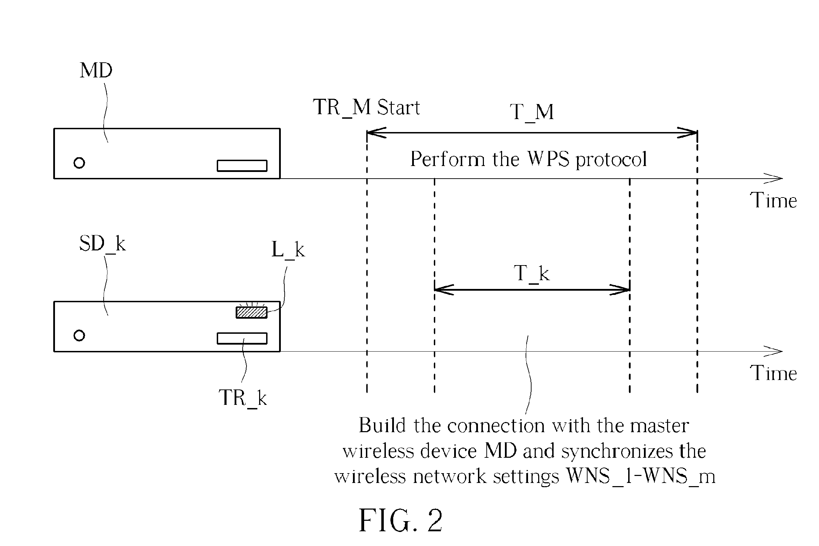

FIG. 1 is a schematic diagram of a wireless communication system 10 according to an embodiment of the present invention. FIG. 2 is an operation timing diagram of the wireless communication system 10 in FIG. 1. The wireless communication system 10 includes a master wireless device MD and slave wireless devices SD_1-SD_n. The master wireless device MD includes wireless network settings WNS_1-WNS_m and a master timer TR_M. The master timer TR_M is configured to generate a period T_M. The master wireless device MD performs a Wi-Fi™ protected setup (WPS) protocol within the period T_M, and the slave wireless devices SD_1-SD_n may build connections with the master wireless device MD by the WPS protocol to synchronize the wireless network settings WNS_1-WNS_m. Furthermore, the master wireless device MD may not perform the WPS protocol outside the period T_M.

Each slave wireless devices SD_k (where k represents a positive integer and 1 ≦ k ≦ n) of the slave wireless devices SD_1-SD_n includes a slave timer TR_k and a light emitting diode L_k. The slave timer TR_k is configured to generate a period T_k, and the slave wireless device SD_k may build the connection with the master wireless device MD by the WPS protocol within the period T_k to synchronize the wireless network settings WNS_1-WNS_m. If the slave wireless device SD_k successfully synchronizes the wireless network settings WNS_1-WNS_m with the master wireless device MD within the period T_k, the light emitting diode L_k flashes rapidly to indicate a success. If the slave wireless device SD_k fails to synchronize the wireless network settings WNS_1-WNS_m with the master wireless device MD within the period T_k, the light emitting diode L_k flashes slowly to indicate a failure.

In detail, the master wireless device MD starts the master timer TR_M and performs the WPS protocol. The slave wireless device SD_k also starts the slave timer TR_k and performs the WPS protocol within the period T_M. The slave wireless device SD_k searches whether the master wireless device MD exists by the WPS protocol (i.e. by a wireless network). If the master wireless device MD exists, the slave wireless device SD_k builds the connection with the master wireless device MD and synchronizes the wireless network settings WNS_1-WNS_m. If the slave wireless device SD_k cannot find the master wireless device MD or fails to synchronize the wireless network settings WNS_1-WNS_m within the period T_k configured by the slave timer TR_k, the slave wireless device SD_k stops performing the WPS protocol and stops synchronizing the wireless network settings WNS_1-WNS_m with the master wireless device MD. At this moment, the light emitting diode L_k flashes slowly to indicate to a user that the wireless network settings WNS_1-WNS_m failed to be synchronized. On the contrary, if the slave wireless device SD_k successfully synchronizes the wireless network settings WNS_1-WNS_m with the master wireless device MD, the light emitting diode L_k flashes rapidly to indicate to the user that the wireless network settings WNS_1-WNS_m are successfully synchronized.

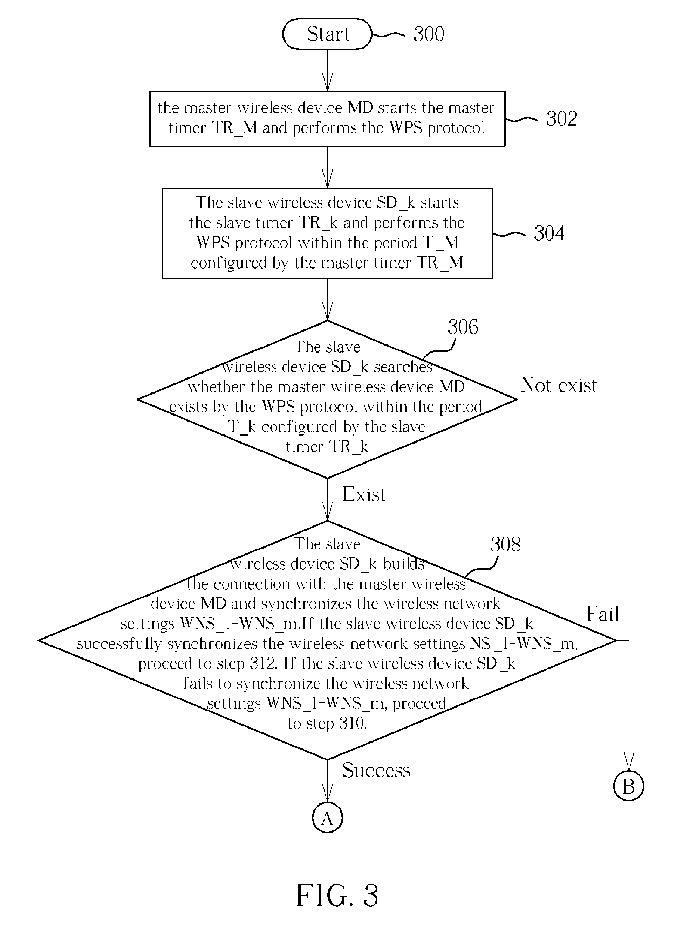

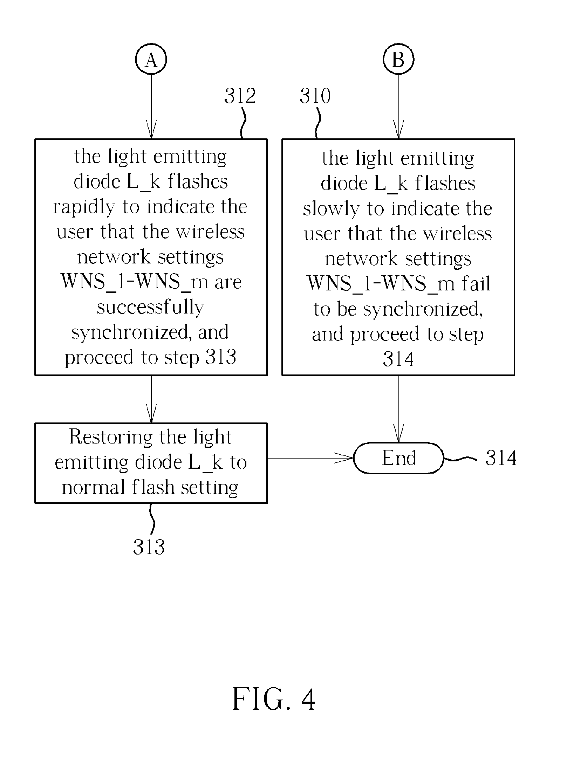

The operations of the wireless communication system 10 may be summarized as a wireless network settings synchronizing process 30. As shown in FIG 3 and FIG. 4, the wireless network settings synchronizing process 30 include the following steps:
- Step 300:: start.
- Step 302:: the master wireless device MD starts the master timer TR_M and performs the WPS protocol.
- Step 304:: the slave wireless device SD_k starts the slave timer TR_k and performs the WPS protocol within the period T_M configured by the master timer TR_M.
- Step 306:: the slave wireless device SD_k searches whether the master wireless device MD exists by the WPS protocol within the period T_k configured by the slave timer TR_k. If the master wireless device MD exists, proceed to step 308, and if the master wireless device MD does not exist, proceed to step 310.
- Step 308:: the slave wireless device SD_k builds the connection with the master wireless device MD and synchronizes the wireless network settings WNS_1-WNS_m. If the slave wireless device SD_k successfully synchronizes the wireless network settings WNS_1-WNS_m with the master wireless device MD within the period T_k configured by the slave timer TR_k, proceed to step 312. If the slave wireless device SD_k fails to synchronize the wireless network settings WNS_1-WNS_m with the master wireless device MD within the period T_k, proceed to step 310.
- Step 310:: the light emitting diode L_k flashes slowly to indicate the user that the wireless network settings WNS_1-WNS_m fail to be synchronized, and proceed to step 314.
- Step 312:: the light emitting diode L_k flashes rapidly to indicate the user that the wireless network settings WNS_1-WNS_m are successfully synchronized, and proceed to step 313.
- Step 313:: restoring the light emitting diode L_k to normal flash setting.
- Step 314:: end.

Additionally, the light emitting diode L_k may also be utilized in various flashing mechanisms to indicate to the user whether the wireless network settings WNS_1-WNS_m are successfully synchronized. The above flashing mechanism of the embodiment is an example for explaining and does not limit the scope of the present invention. Those skilled in the art can design other mechanisms to indicate to the user whether the wireless network settings WNS_1-WNS_m are successfully synchronized according to the actual devices and should not be limited to the light emitting diode.

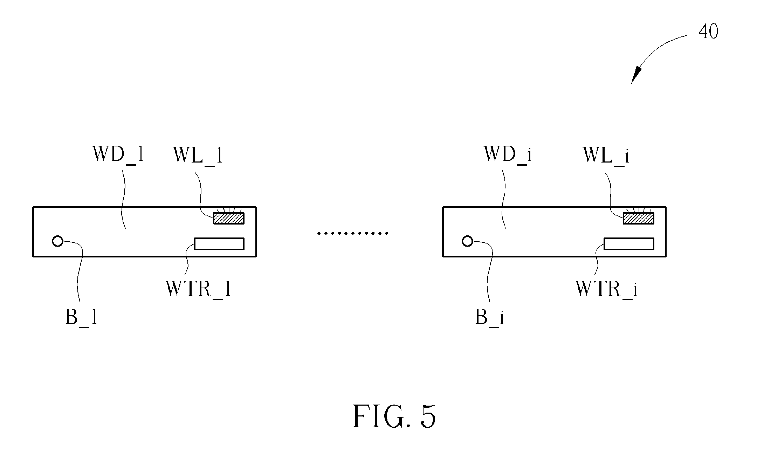

Furthermore, in the wireless communication system 10, the master wireless device MD is a synchronizing master of the slave wireless devices SD_1-SD_n, and the master-slave relationships between the master wireless device MD and the slave wireless devices SD_1-SD_n are not absolute. An example is seen in FIG. 5, which is a schematic diagram of a wireless communication system 40 according to an embodiment of the present invention. The communication system 40 includes wireless devices WD_1-WD_i. Each wireless device WD_j (where j represents a positive integer and 1 ≦ j ≦ i ) of the wireless devices WD_1-WD_i includes a button B_j, a timer WTR_j, and a light emitting diode WL_j. The button B_j is utilized to configure the wireless device WD_j as a master wireless device or a slave wireless device. For example, when the button B_j is shortly pressed, the wireless device WD_j may be configured as the master wireless device, and when the button B_j is long pressed, the wireless device WD_j may be configured as the slave wireless device.

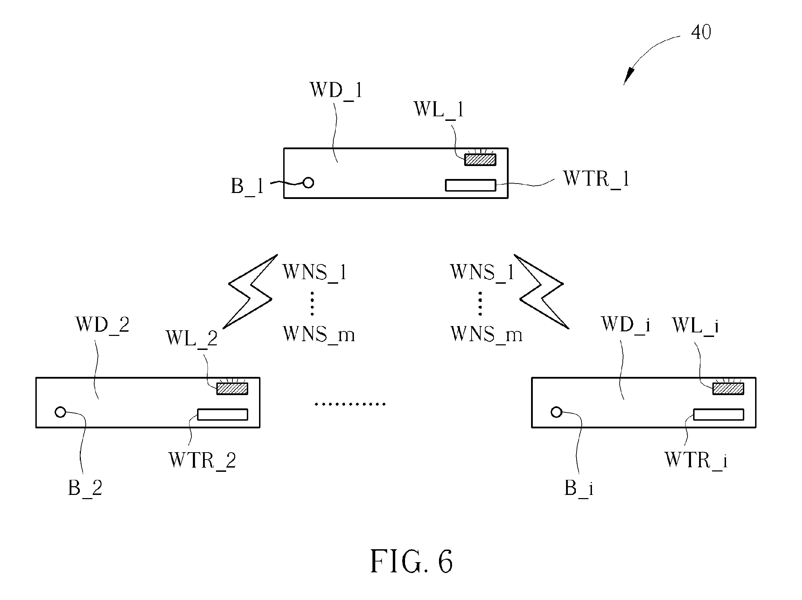

As shown in FIG. 6, the user may shortly press the button B_1 to configure the wireless device WD_1 as the master wireless device, and the user may long press the button B_2-B_i to configure the wireless device WD_2-WD_i as the slave wireless devices. Then, the wireless device WD_2-WD_i may build the connections with the wireless device WD_1 by the WPS protocol to synchronize the wireless network settings WNS_1-WNS_m. The synchronizing process may refer to the wireless network settings synchronizing process 30, and will not be narrated hereinafter.

Noticeably, the configuring of the wireless devices WD_1-WD_i as the master wireless device or the slave wireless devices is not limited to utilizing the buttons, which may also be performed by a web graphical user interface (Web GUI), a technical report-069, or a simple network management protocol (SNMP). Those skilled in the art can utilize other mechanisms according to their actual requirements.

In the prior art, the network settings of the multiple wireless devices is set manually by a human or by a wired local area network (LAN), which is very time-consuming and labor-intensive. Additionally, when the multiple wireless devices cannot communicate through the wired LAN, the network settings of the multiple wireless devices may not be synchronized through the wired LAN. In comparison, in the present invention, the network settings of the multiple wireless devices are effectively synchronized through the wireless network. Thus, the necessity for human input and the problem that the multiple wireless devices cannot synchronize through the wired LAN may also be solved.

## Claims

1. A network settings synchronization method (30) for a wireless communication system (10), wherein the wireless communication system (10) comprises a master wireless device (MD) and at least one slave wireless device (SD_1-SD_n), the network settings synchronization method (30) **characterized by:**
the at least one slave wireless device (SD_1-SD_n) building a connection with the master wireless device (MD) through a communication protocol (308); and
the at least one slave wireless device (SD_1-SD_n) synchronizing a plurality of network settings with the master device (MD) through the connection (308).

2. The network settings synchronization method (30) of claim 1, further **characterized by:**
the master wireless device (MD) starting a master timer (TR_M); and
the master wireless device (MD) performing a master mode of the communication protocol to allow the at least one slave wireless device (SD_1-SD_n) to build the connection with the master wireless device (MD) through the communication protocol before the master timer (TR_M) expires (302).

3. The network settings synchronization method (30) of claim 1, further **characterized by:**
each slave wireless device (SD_k) of the at least one slave wireless device (SD_1-SD_n) starting a slave timer (TR_K); and
the slave wireless device (SD_k) performing a slave mode of the communication protocol to build the connection with the master wireless device (MD) through the communication protocol before the slave timer (TR_k) expires (304-306).

4. The network settings synchronization method (30) of any one of claims 1-3, further **characterized by:**
indicating, by a flashing mechanism, whether the at least one slave wireless device (SD_1-SD_n) completely synchronizes the plurality of network settings with the master device (MD).

5. The network settings synchronization method (30) of any one of claims 1-4 wherein the wireless communication system (10) comprises a plurality of wireless devices (WD_1-WD_i), further **characterized by:**
setting one wireless device of the plurality of wireless devices (WD_1-WD_i) as a master wireless device (MD);
setting at least one wireless device of the plurality of wireless devices (WD_1-WD_i) as the at least one slave wireless device (SD_1-SD_n).

6. The network settings synchronization method (30) of claim 5, further **characterized in that** setting the wireless device of the plurality of wireless devices (WD_1-WD_i) as the master wireless device (MD) is performed by a button, a web graphical user interface (Web GUI), a technical report-069, or a simple network management protocol (SNMP).

7. The network settings synchronization method (30) of any one of claims 1-6, further **characterized in that** the communication protocol is a Wi-Fi™ protected setup (WPS) protocol.

8. A wireless communication system (10), **characterized by:**
a master wireless device (MD) comprising a plurality of network settings (WNS_1-WNS_m); and
at least one slave wireless device (SD_1-SD_n) configured to build a connection with the master wireless device (MD) through a communication protocol, and synchronize the plurality of network settings (WNS_1-WNS_m) with the master device (MD) through the connection.

9. The wireless communication system (10) of claim 8, further **characterized in that** the master wireless device (MD) further comprises:
a master timer (TR_M) configured to generate a period (T_M) to perform a master mode of the communication protocol within the period (T_M).

10. The wireless communication system (10) of claim 8, further **characterized in that** each slave wireless device (SD_k) of the at least one slave wireless device (SD_1-SD_n) further comprises:
a slave timer (TR_k) configured to generate a period (T_k) to perform a slave mode of the communication protocol within the period (T_k).

11. The wireless communication system (10) of any one of claims 8-10, further **characterized in that** each slave wireless device (SD_k) of the at least one slave wireless device (SD_1-SD_n) further comprises:
a flashing device (L_k) configured to indicate by a flashing mechanism whether the slave wireless device (SD_1-SD_n) completely synchronizes the plurality of network settings (WNS_1-WNS_m) with the master device (MD).

12. The wireless communication system (10) of claim 11, further **characterized in that** the flashing device (L_k) is a light emitting diode (LED).

13. The wireless communication system (10) of any one of claims 8-12, further **characterized in that** the communication protocol is a Wi-Fi™ protected setup (WPS) protocol.
